# FASCICULE DE BREVET EUROPEEN

(11) **EP 3 456 759 B1**
(45) Date de publication et mention de la délivrance du brevet: **28.10.2020**
(21) Numéro de dépôt: 18191743.6
(22) Date de dépôt: 18.04.2013
(51) Int. Cl.: C09K 8/508, C09K 8/44, C08J 3/075, C09K 8/575, C09K 17/22, C09K 17/46, C08L 33/02, C08L 33/04, C08L 33/08, C08L 33/10, C08L 33/14

(54) **TRAITEMENT DE FORMATIONS SOUTERRAINES PAR DES GELS**
BEHANDLUNG VON UNTERIRDISCHEN FORMATIONEN MITHILFE VON GELEN
GEL TREATMENT FOR SUBTERRANEAN FORMATIONS

(30) Priorité: 18.04.2012 FR 1201145
(43) Date de publication de la demande: 20.03.2019
(62) Demande divisionnaire de: 13716801.9
(73) Titulaire: RHODIA OPERATIONS, 93300 Aubervilliers (FR)
(72) Inventeur: CADIX, Arnaud, 59800 LILLE (FR); VUONG, Chi-Thanh, 77185 Lognes (FR)
(74) Mandataire: Cordier, Pascal Christian

(56) Documents cités:
- EP-A1- 0 350 548
- WO-A1-2004/067470
- CN-A- 101 885 591
- GB-A- 1 458 662
- SU-A1- 492 645
- US-A1- 2005 203 256

## Description

La présente invention a trait à une méthode permettant d'inhiber le passage de liquide ou de gaz, de façon ponctuelle et réversible, dans des cavités, excavations, interstices et/ou fissures au sein de formations souterraines, et qui est notamment adaptée pour obturer de façon temporaire des puits forés au sein d'un réservoir hydrocarboné. Cette méthode met en oeuvre une composition liquide qui peut être pompée et injectée sous forme liquide au sein d'un puits ou plus généralement au sein d'une formation souterraine, et qui forme par la suite un gel stable à haute température au sein de la formation souterraine.

Diverses techniques ont été proposées qui visent à assurer un traitement de puits ou de formations souterraines du type précité. Le but de ces techniques est de former des bouchons gélifiés (« plugs »). Pour ne citer qu'une application particulière parmi les emplois possibles de ces bouchons, ils peuvent par exemple être employés pour assurer de façon temporaire l'isolation d'une zone d'un puits de forage ou de toute autre zone d'une formation souterraine vis-à-vis de gaz et de liquides, pour ne citer qu'une application particulière.

Il a notamment été proposé l'emploi de composition de polysaccharides modifiés, fluides de leur injection et dont la viscosité augmente ensuite progressivement au sein de la formation souterraine où elles sont injectées. Ces compositions, qui comprennent typiquement des polysaccharides de type guar ou cellulose modifiés par des groupes carbonate d'éthylène qui s'hydrolysent progressivement en milieu aqueux, présentent l'inconvénient de ne pouvoir être employés qu'à des températures relativement faibles, typiquement en deçà de 120°C, ce qui constitue un frein à leur utilisation dans de nombre de puits ou formations souterraines où il n'est pas rares que les conditions d'exploitation induisent des températures dépassant 150°C, voire 200°C. EP 0350 458 concerne la réduction de la perméabilité de zones fortement perméables dans les formations souterraines par injection d'un mélange de polymères qui forment un gel.

Un but de la présente invention est de fournir une méthode adaptée à la formation réversible au sein d'une formation souterraine de bouchons du type précité, permettant d'inhiber le passage de liquide et/ou de gaz, et ce à des température de 150°C ou plus, ces bouchons restant de préférence stables à ces températures, à savoir propres à assurer un effet d'isolation vis-à-vis de liquides et/ou de gaz pendant une durée d'au moins 7 jours, de préférence pendant au moins 10 jours.

A cet effet, la présente invention propose d'injecter au sein d'un milieu où on souhaite former un gel une composition de latex d'un polymère particulier, à savoir un polymère porteur de fonctions ester pendantes, dans laquelle on ajoute, juste avant l'injection, un composé basique (base) propre à induire une hydrolyse progressive d'au moins une partie de ces fonctions ester pendantes en des fonctions acide carboxylique et/ou alcool, ce qui induit une transformation progressive du latex, initialement fluide, en une composition de type gel, avec une augmentation progressive de la viscosité, permettant, au départ, de manipuler aisément la composition, notamment de la pomper et de l'injecter, et, *in fine,* d'assurer la formation du bouchon recherchée.

Plus précisément, selon un premier aspect, la présente invention a pour objet un procédé de formation d'un gel au sein d'un milieu M (tel qu'un puits de pétrole, une roche pétrolifère ou tout autre formation souterraine), qui comprend les étapes suivantes :
(E1) à un latex fluide L comprenant des particules dispersées d'un polymère P, porteur de fonctions latérales ester, on ajoute un composé basique C, en une quantité propre à hydrolyser au moins une partie desdites fonctions latérales ester en des fonctions acide carboxylique et/ou alcool, ce par quoi on obtient un latex modifié L' dont la viscosité augmente progressivement avec le temps depuis l'addition du composé C jusqu'à la formation d'un gel, notamment en élevant la température ; puis
(E2) on introduit dans le milieu M le latex modifié ainsi obtenu avant la formation du gel et on laisse le gel se former au sein du milieu M.

Selon un autre aspect, l'invention a pour objet un kit pour la mise en oeuvre des étapes (E1) et (E2) précitées, qui comprend :
- au moins un premier récipient contenant un latex fluide L tel que défini ci-dessus.
- au moins un second récipient, distinct du premier, contenant un composé basique C du type décrit ci-dessus, à ajouter au latex L pour former le latex modifié L' pour la formation d'un gel selon l'étape (E2).

Par « polymère porteur de fonctions latérales esters », on entend un polymère comprenant :
(i) un squelette non interrompu par des fonctions esters ; et
(ii) portées par ce squelette, des fonctions esters identiques ou distinctes, de formule -COOR et/ou -O-(C=O)-R, où chacun des groupes R sur chacune des fonctions ester présente sur le polymère est, de façon indépendante, une chaîne hydrocarbonée, linéaire ou ramifiée, saturée ou insaturée, cyclisé en tout ou partie ou non cyclique, éventuellement interrompue par un ou plusieurs hétéroatomes (notamment S, O, N ou Si), le groupe R pouvant être éventuellement halogénés, voire perhalogéné. Typiquement le groupe R est un groupe alkyle comportant de 1 à 6 atomes de carbone, notamment un groupe méthyle, éthyle, propyle, n-propyle, butyle, isobutyle ou tertbutyle.

Les travaux réalisés par les inventeurs dans le cadre de la présente invention ont maintenant permis de mettre en évidence que la mise en oeuvre des étapes (E1) et (E2) permet d'obtenir, de façon très simple et directe, la formation d'un gel avec un effet retard suffisant pour permettre l'injection du gel en formation au sein de tout type de milieu M (formation souterraine poreuse ou fracturée, puits de pétrole, ou tout type de milieu poreux u présentant des cavités) et la formation du gel au sein d'une zone ciblé de ce milieu, y compris dans des zones nécessitant un temps d'injection conséquent (la gélification du latex L intervient de façon progressive, avec une viscosité qui reste suffisamment faible dans un premier temps pour permettre une migration aisée du latex vers une zone sélectionnée). En outre, notamment en modulant la composition du polymère, il est possible de régler la vitesse de formation du gel en fonction des applications visées pour le gel. En particulier, la vitesse de formation du gel peut être réduite en introduisant des groupements gélifiants qui sont décrits plus en détail ci-après.

Par ailleurs, il s'avère que les étapes (E1) et (E2) conduisent à la formation de gels qui présentent des stabilités thermiques élevées. Ainsi, un gel tel qu'obtenu à l'issue de l'étape (E2) est généralement propre à assurer de façon durable (typiquement pendant au moins 7 jours, voire au moins 10 jours) une isolation vis-à-vis de liquides ou de gaz à des températures supérieures à 150°C, ce qui est particulièrement avantageux en comparaison des stabilités obtenues avec les polysaccharides modifiés décrits plus haut dans la présente description. Ainsi, selon un mode de réalisation envisageable de l'invention, tout ou partie de l'étape (E2) est réalisé à une température supérieure ou égale à 150°C, voire supérieure à 200°C, par exemple entre 150 et 250°C et/ou le gel formé dans l'étape (E2) est utilisé dans ces gammes de température
En outre, les gels obtenus selon les étapes (E1) et (E2) présentent une résistance mécanique élevée. Cette résistance mécanique varie en fonction de la composition exacte des polymères employés, mais le gel présente typiquement une élasticité supérieure ou égale à 1000 Pa (typiquement de l'ordre de 500 lbs/100 sq ft). Néanmoins, le bouchon formé à partir d'un gel préparé selon l'invention est réversible et il peut être éliminé aisément, notamment en lui appliquant une contrainte mécanique suffisamment importante ou en l'attaquant chimiquement (base forte, acide fort, oxydant ...). Ainsi, un gel tel qu'obtenu selon l'invention peut typiquement être employé pour former de façon réversible un bouchon au sein d'un milieu M qui est une formation souterraine, notamment au sein d'un puits de pétrole.

Un autre avantage du procédé de l'invention est qu'il peut être mis en oeuvre dans des environnements chimiques divers, par exemple en contact avec des saumures concentrées en sels ou bien avec des fluides d'extraction.

Par ailleurs, outre le fait qu'elle est très aisée à mettre en oeuvre, la conduite des étapes (E1) et (E2) peut être effectuée avec un coût réduit, compatible avec une mise en oeuvre à l'échelle industrielle. Typiquement, les étapes (E1) et (E2) peuvent être très aisément mises en oeuvre par un opérateur sur un site où on souhaite réaliser le gel à partir du latex L. Le latex L est un liquide très facilement transportable et manipulable, de même que le composé basique C. Ces deux composés peuvent être stockés pendant des durées importantes (typiquement au moins un an) et transportés, de façon non mélangées (avantageusement sous la forme du kit précité) jusqu'au site d'utilisation, l'augmentation de viscosité du latex ne débutant que lors de l'introduction du composé basique C dans le latex L et non auparavant. Lors de la mise en oeuvre de l'étape (E2) à haute température au sein du milieu M, l'augmentation de la viscosité accélère lorsque la vitesse s'élève, mais la formation du gel reste cantonnée dans le milieu M. Ainsi, en mettant en œuvre le procédé de l'invention, l'opérateur a uniquement à opérer un mélange très simple puis à introduire le mélange obtenu dans le milieu M où on souhaite former le gel, ce qui est très aisément réalisable car le mélange est fluide et très facilement pompable et injectable. L'invention permet ainsi d'obtenir les avantages d'un gel au sein du milieu M en s'affranchissant des inconvénients d'un gel (notamment des difficultés liées à sa manipulation) avant et lors de l'introduction dans le milieu.

Pour l'ensemble de ces raisons, la méthode proposée selon l'invention se révèle un moyen particulièrement intéressant, pratique et efficace de réaliser un gel au sein de tout type de milieu, notamment au sein d'une formation souterraine ou d'un puits de pétrole.

Différents aspects de l'invention et modes de réalisation préférentiels sont décrits plus en détails ci-après.

### Le latex L

Le latex L, fluide, qui est utilisé dans l'étape (E1) pour former le latex modifié L' peut être toute dispersion de polymères P du type précité dans un milieu solvant, de préférence un milieu aqueux, notamment de l'eau ou bien un mélange eau/alcool. La viscosité de ce latex L est, à une concentration 10% en masse en polymère P, de préférence inférieure à 100 mPa.s, par exemple compris entre 1 et 50 mPa.s.

Il peut typiquement s'agir d'un latex obtenu à l'issue d'une polymérisation en émulsion.

Le polymère P présent dans le latex L est typiquement un polymère comportant un squelette stable dans les conditions des étapes (E1) et (E2). En particulier, il s'agit en général d'un squelette non interrompu par des liaisons dont l'intégrité chimique peut être dégradée dans les conditions de traitement basique des étapes (E1) et (E2). Typiquement, le polymère P présent dans le latex L employé dans l'étape (E1) est un polymère issu d'une polymérisation radicalaire (de préférence en émulsion) de monomères éthyléniquement insaturés, tels que des acrylates ou des méthacrylates. Il peut s'agir d'un homopolymère ou bien d'un copolymère. Les copolymères sont en général préférés car ils permettent de moduler les propriétés du polymère. Selon un mode de réalisation intéressant, le polymère P est un copolymère statistique. Alternativement, le polymère P peut être un copolymère séquencé (à blocs), par exemple un dibloc ou un tribloc. Dans le cas d'un polymère à blocs, chacun des blocs peut être un homopolymère ou bien un copolymère statistique.

De façon caractéristique, le polymère P présent dans le latex L employé dans l'étape (E1) est porteur de groupes esters latéraux (pendants). Typiquement, ces groupes esters peuvent être introduits dans le polymère en le préparant à partir de monomères consistant en ou comprenant des acrylates répondant à la formule H₂C=COOR, où R à la définition précitée, R étant de préférence un groupe alkyle comportant de 1 à 6 atomes de carbone, notamment un groupe méthyle, éthyle, propyle, n-propyle, butyle, isobutyle ou tertbutyle.

Selon un mode de réalisation avantageux, le polymère P comprend des fonctions latérales esters d'éthyle -COO-C₂H₅, de propyle -COO-C₃H₇ ou de butyle -COOC₄H₉, qui résultent avantageusement de la polymérisation de monomères acrylate d'éthyle, de propyle ou de butyle, respectivement. Selon un autre mode de réalisation, le polymère P comprend des fonctions latérales esters de type éthanoate -O-(C=O)-CH₃, propanoate -- O-(C=O)-C₂H₅, ou butanoate -O-(C=O)-C₃H₇.

Selon un mode de réalisation particulier, le polymère P est porteur de fonctions latérales esters d'éthyle -COO-C₂H₅, résultant avantageusement d'une polymérisation d'acrylate d'éthyle et plus avantageusement d'une copolymérisation d'acrylates d'éthyle avec d'autres monomères.

En plus de groupes esters, il est souvent intéressant que le polymère P soit porteur d'autres type de fonctions, qui sont aptes à lui conférer des propriétés intéressantes.

Selon une variante intéressante de l'invention, le polymère P est porteur de groupes (dits ci-après groupes « stabilisants ») qui permettent une stabilisation du latex L qui permet de le stocker pendant des périodes particulièrement prolongées ou bien facilitent son transport sans risque de voir les polymères décanter ou crémer. Il s'agit typiquement de groupes hydrophiles. A titre de groupes stabilisants de ce type, on peut citer, entre autres les groupes latéraux ioniques ou ionogènes (sulfonates, carboxylique, zwitterioniques) typiquement apportés par les monomères ionogènes, (qui permettent d'assurer une répulsion électrostatique entre les particules du latex) et les groupes neutres hydrophiles typiquement apportés par des monomères neutres hydrophiles (qui assurent quant à eux une stabilisation stérique). De préférence, les 2 types de stabilisations sont combinés pour assurer une plus grande stabilité dans une large plage de pH de synthèse et/ou de formulation. Des groupements stabilisants intéressants sont des groupes sulfobétaines.

Les monomères ionogènes peuvent, entre autres, être choisis parmi : les sulfonates (allyl sulfonate, méthallyl sulfonate, AMPS, styrène sulfonate, allyloxy hydroxy propyl sulfonate), les monomères carboxyliques (acide acrylique, acide méthacrylique, acide maléique, acide itaconique, acrylate propyl sulfonate, méthacrylate propyl sulfonate, béta-carboxy ethylacrylate, acide acrylamidoglycolique...), zwitterionique (SPE, SPP, SPV, carboxybetaine...)
Les monomères neutres peuvent notamment être choisis parmi : l'acrylamide, l'hydroxyéthyl méthacrylate, le GMMA, les méthacrylamides, le diméthylacrylamide, la N-vinyl pyrrolidone, le PEG-methacrylate.

Les polymères P peuvent aussi être porteurs de groupements stabilisants sulfate ou phosphonate. Ils peuvent comprendre des monomères acide vinylphosphoniques.

Alternativement, on peut employer des monomères de type tensioactifs polymérisable du type des SIPOMER HPM 300 et 400 disponibles auprès de la société Rhodia.

Les polymères P issus d'une copolymérisation d'acrylates d'alkyle (d'éthyle notamment) et d'acrylates porteurs de groupes stabilisants du type précité (en particulier des sulfobétaines) s'avèrent intéressants selon l'invention. En particulier, les copolymères d'acrylate d'éthyle et d'acrylamido de type sulfobétaine sont bien adaptés à la mise en oeuvre des étapes (E1) et (E2).

Selon une autre variante (tout à fait compatible avec la variante précédente où le polymère est porteur de groupes stabilisants), le polymère P peut être porteur de groupements hydrophobes (désignés également par groupe « gélifiants » ci-après), qui sont propres à accentuer les phénomènes de gélification dans les étapes (E1) et (E2). Ces groupes « gélifiants » peuvent par exemple être des groupes hydrophobes résultants de la polymérisation de monomères hydrophobes non hydrolysables tels que le styrène, le N-dodécylméthacrylamide ou des acrylates ou méthacrylates de chaines hydrophobes très longues (supérieures à 6 carbones). Ces monomères peuvent être introduits à des taux faibles (inférieurs à 10% à 5%mol selon leur nature) dans le polymère et induire un retard significatif de la gélification.

Les groupes gélifiants précités sont de préférence stables dans les conditions des étapes (E1) et (E2). En particulier, il s'agit de préférence de groupements inertes vis-à-vis du composé basique C dans les conditions de température de l'étape (E2).

Typiquement, un polymère P selon l'invention peut typiquement comprendre, en % en mole par rapport à la quantité d'unités monomères présentes sur le polymère :
- de 40 à 99,5 % d'unités monomères porteuses de groupements ester latéraux (par exemple des unités acrylate d'éthyle)
- de 0,5 à 10%, d'unités monomères porteuses de groupements stabilisants
- de 0 à 50 % d'unités monomères porteuses de groupements gélifiants

Quelle que soit la nature exacte du polymère P, sa concentration au sein du latex L est de préférence suffisante pour obtenir une bonne stabilité de gel à l'issue de l'étape (E2). Il est toutefois par ailleurs préférable que cette concentration soit suffisamment faible pour que le gel formé dans l'étape (E2) puisse ultérieurement être éliminé en le soumettant à une contrainte mécanique suffisante. Il est à noter à ce sujet, que le plus souvent, la méthode de réalisation du gel selon l'invention est employée de façon réversible. Le plus souvent, à l'issue de l'étape (E2), lorsque le gel a été formé et a assuré son rôle au sein du milieu M (formation d'un bouchon par exemple), on peut mettre en œuvre une étape (E3) dans laquelle le gel formé à l'issue de l'étape (E2) est éliminé (ou évacué), typiquement en soumettant ce gel à une contrainte mécanique (mise sous pression suffisante notamment).

La concentration en polymère P dans le latex L est de ce fait à adapter au cas par cas. Toutefois, typiquement, il se révèle le plus souvent avantageux que la concentration en polymère P au sein du latex L (exprimé par le rapport, en pourcentage, de la masse de polymère P présent dans le latex L, rapporté à la masse totale du latex L) :
- typiquement, pour obtenir un gel de tenue suffisante, il est préférable que la concentration en polymère P dans le latex L soit supérieure ou égale à 2%, plus préférentiellement supérieure ou égale à 3%, voire supérieure ou égale à 5%
- typiquement, pour assurer une élimination du gel après que le gel a assuré son rôle, il est préférable que la concentration en polymère P dans le latex L soit inférieure ou égale à 20%, plus préférentiellement inférieure ou égale à 15% notamment inférieure ou égale à 8%

Par ailleurs, le latex P est de préférence une dispersion colloïdale stable comprenant des particules de polymère P. Le latex P comprend typiquement le polymère P sous la forme de particules dispersées (typiquement des particules colloïdales stables) ayant en général une taille moyenne de particules pouvant aller de 50 nm à quelques microns, avantageusement entre 80 et 500 nm. La taille de particules à laquelle il est fait référence dans la présente description correspond à celle telle que mesurée par diffusion de lumière, notamment en utilisant le Zetasizer de Malvern.

En plus du polymère P, le latex peut éventuellement comprendre des additifs, notamment des agents tensioactifs propres à stabiliser le latex.

Selon un mode de réalisation particulier, le latex L est exempt d'additifs stabilisants autres que le polymère P. Dans ce cas, le polymère P est avantageusement porteurs de groupes stabilisants du type précité.

Selon un mode de réalisation particulier, le latex L est essentiellement constitué de polymères P dispersé au sein du milieu solvant avec moins de 2% en masse, voire moins de 1% d'autres composés. Selon un mode particulier, le latex L est exclusivement constitué d'un milieu dispersant (de l'eau ou un mélange eau : alcool) et de polymère P porteurs de groupes stabilisants.

### Le composé basique C

On peut utiliser selon l'invention tout composé basique apte à hydrolyser au moins une partie des groupements ester présents sur le polymère P.

Un composé basique C bien adapté selon l'invention est le silicate de sodium. Alternativement, on peut employer de la soude.

La quantité de composé C mise en œuvre est de préférence telle qu'elle permet d'hydrolyser au moins une partie des groupements ester présents initialement sur le polymère P. Il est toutefois préférable, notamment pour obtenir une bonne tenue de gel que le polymère reste porteur de groupements hydrophobes à l'issue de la réaction avec le composé C.

De ce fait, notamment lorsque le polymère P n'est pas porteur de groupements « gélifiants » hydrophobes du type précité, la quantité de composé C est de préférence telle qu'elle permet l'hydrolyse d'une partie seulement des fonctions esters (de sorte qu'une partie reste intacte pour assurer une bonne tenue du gel). Typiquement, on préfère que le composé C soit introduit en une quantité qui permettrait en théorie d'hydrolyser de 50 à 90% des fonctions esters du polymère P, de préférence 60 à 80%, notamment de l'ordre de 75%. Cette quantité de composé C peut être supérieure et aller jusqu'à 100% ou plus lorsque le polymère P est porteur de groupes stabilisants.

La formation du gel selon l'invention peut être employée pour toute application nécessitant la réalisation d'un gel utilisable à une température supérieure à 150°C. Le gel peut notamment être employé pour former un bouchon au sein d'un puits de pétrole ou plus généralement pour isoler une zone d'une formation souterraine
Le gel peut aussi être employé dans une formation rocheuse poreuse pour empêcher les venues indésirables d'eau ou de gaz.

L'invention va maintenant être illustrée par l'exemple non limitatif donné ci-après.

### EXEMPLE

### 1. Synthèse d'un latex à base d'un polymère statistique porteur de groupement ester (unités acrylates d'éthyle) et de groupements sulfobétaine

Dans un réacteur verré de 1 litre équipé d'une agitation mécanique, d'un réfrigérant, d'une entrée d'azote et d'une double enveloppe où circule un fluide caloporteur, on a introduit à température ambiante (20°C) :
9,6 g de 3-(diméthyl{3-[(2-méthylacryloyl)amino]propyl}ammonio)propane-1-sulfonate 37,5 g de laurylsulfate de sodium
745,9 g d'eau.

Le milieu réactionnel a été chauffé et maintenu à 85°C.

A cette température de 85°C, on a ajouté au milieu sont ajoutés 0,39 g de persulfate de sodium et 2 g d'eau.

15min après cet ajout, on a ajouté progressivement et simultanément sur une durée de 4h
- 325.4g d'acrylate d'éthyle ; et
- un mélange de 1.17g de persulfate et de 20g d'eau.

30 minutes après la fin de ces ajouts, on a introduit 0,77g de tert-Butyl peroxybenzoate, puis, 15 minutes après, on a introduit progressivement en une durée d'une heure une solution de 0,35g d'acide L-ascorbique et 20g d'eau.

On a ainsi obtenu un latex fluide, stable, dont la taille de particules, mesurée au Zetasizer, est de 300nm.

### 2. Hydrolyse basique par du silicate de sodium du latex et formation progressive du gel

### Formulation avec du silicate de sodium (E1)

Le latex obtenu selon l'exemple 1 est dilué à une concentration de 10% en polymère actif par une solution aqueuse de chlorure de potassium à 20g/L.

A cette dispersion fluide est ajouté 15g de silicate de sodium liquide (solution aqueuse de 28.6% of SiO2, 8.6% of Na2 O) pour 100g de solution de latex. La quantité de silicate utilisée ici permet pour une conversion totale de la réaction d'hydrolyse d'atteindre un degré d'hydrolyse du latex de 53%.

### Suivi de l'hydrolyse par rhéologie (E2)

Cette solution contenant le latex et le silicate est fluide et stable à température ambiante. La viscosité est de 1 à 2 mPa.s.

15mL de cette solution sont placés dans la cellule de Couette de type B01 d'un rhéomètre Brookfield type PVS (fourni par Brookfield Engineering Laboratories Inc.) préalablement étalonné avec de l'huile silicone standard de 500mPa.s.

La viscosité est suivie lors d'une rampe en température de 2h de 20°C à 200°C puis de 2h de 200°C à 20°C. Lors de la rampe de montée en température, la viscosité reste inférieure à 100mPa.s jusqu'à une température de 170°C. La viscosité augmente ensuite rapidement pour une température supérieure à 170°C. Cette augmentation est représentative de l'hydrolyse et de la gélification du mélange.

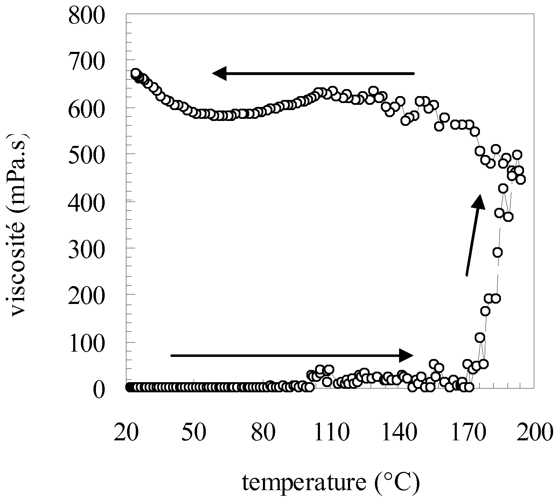

Lors de la rampe descendante en température, on confirme que la gélification est irréversible car une fois chauffé au-delà de 180°C la viscosité du mélange reste élevée. La figure ci-annexée illustre l'évolution de la viscosité lors de l'étape (E2)

### Stabilité du gel au stockage à température élevée.

Le mélange issu de l'étape E1 décrite ci-dessus est dilué à différentes concentrations en polymère P par une solution de chlorure de potassium à 20g/L. 50mL de ces différentes solutions sont placées dans des cellules en téflon pressurisées (« acid digestion vessel modèle 4748 Large Capacity » fournies par Parr Instrument Co.) et placées dans une étuve préalablement chauffée à 200°C.

Après différents temps, les cellules sont refroidies à température ambiante et les gels obtenus sont analysés par rhéologie sur un rhéomètre AR2000 fourni par TA Instruments, au moyen d'une géométrie plan-plan strié (diamètre 40mm entrefer 1mm). Les modules élastiques mesurés à une température de 90°C sont reportés dans le tableau ci-dessous.

| | G' (kPa à 1% déformation à 90°C) | | | |
|---|---|---|---|---|
| Cp (% masse) | 1 jour | 4 jours | 7 jours | remarque |
| 2.5 | 0.047 | | | synérèse importante |
| 5 | 1.2 | 4.4 | 9.8 | légère synérèse |
| 7.5 | 4.9 | 8.6 | 14.2 | gel blanc homogène |
| 10 | 4.6 | 26.2 | 50 | gel blanc homogène |

### 3. Hydrolyse basique par de la soude du latex et formation progressive du gel

### Formulation avec de la soude (E1)

Le latex obtenu selon l'exemple 1 est dilué à une concentration de 10% en polymère actif par une solution aqueuse de chlorure de potassium à 20g/L.

A cette dispersion fluide est ajouté 7,5g de soude (NaOH en solution aqueuse à 30% en masse) pour 100g de solution de latex. La quantité de soude utilisée ici permet pour une conversion totale de la réaction d'hydrolyse d'atteindre un degré d'hydrolyse du latex de 31%.

### Suivi de l'hydrolyse par rhéologie (E2)

Cette solution contenant le latex et le silicate est fluide et stable à température ambiante. La viscosité est de 1 à 2 mPa.s.

15mL de cette solution sont placés dans la cellule de Couette de type B01 d'un rhéomètre Brookfield type PVS (fourni par Brookfield Engineering Laboratories Inc.) préalablement étalonné avec de l'huile silicone standard de 500mPa.s.

La viscosité est suivie lors d'une rampe en température de 2h de 20°C à 200°C puis de 2h de 200°C à 20°C. Lors de la rampe de montée en température, la viscosité reste inférieure à 100mPa.s jusqu'à une température de 110°C. La viscosité augmente ensuite rapidement pour une température supérieure à 110°C. Cette augmentation est représentative de l'hydrolyse et de la gélification du mélange.

Lors de la rampe descendante en température, on confirme que la gélification est irréversible car une fois chauffé au-delà de 150°C la viscosité du mélange reste élevée. Le tableau ci-après illustre l'évolution de la viscosité lors de l'étape (E2)

| température (°C) | viscosité (mPa.s) |
|---|---|
| 30 | 1 |
| 50 | 3.1 |
| 70 | 3.7 |
| 90 | 6.5 |
| 110 | 7.3 |
| 130 | 860 |
| 150 | 1570 |
| 170 | 1360 |
| 190 | 910 |
| 170 | 1230 |
| 150 | 1380 |
| 130 | 1430 |
| 110 | 1390 |
| 90 | 1310 |
| 70 | 1220 |
| 50 | 1170 |
| 30 | 1160 |

### Stabilité du gel au stockage à température élevée.

Le mélange issu de l'étape E1 décrite ci-dessus est réparti par échantillons de 50mL dans des cellules en téflon pressurisées (« acid digestion vessel modèle 4748 Large Capacity » fournies par Parr Instrument Co.) et placées dans une étuve préalablement chauffée à 200°C.

Après différents temps, les cellules sont refroidies à température ambiante et les gels obtenus sont analysés par rhéologie sur un rhéomètre AR2000 fourni par TA Instruments, au moyen d'une géométrie plan-plan strié (diamètre 40mm entrefer 1mm). Les modules élastiques mesurés à une température de 90°C sont reportés dans le tableau ci-dessous.

| G' (Pa à 1% déformation à 90°C) | | | |
|---|---|---|---|
| 1 jour | 3 jours | 6 jours | remarque |
| 70 | 63 | 24 | gel transparent |

## Revendications

1. Procédé de formation d'un gel au sein d'un milieu M, notamment au sein d'une formation souterraine, qui comprend les étapes suivantes :
(E1) à un latex fluide L comprenant des particules dispersées d'un polymère P, porteur de fonctions latérales ester, on ajoute un composé basique C, en une quantité propre à hydrolyser au moins une partie desdites fonctions latérales ester en des fonctions acide carboxylique et/ou alcool, ce par quoi on obtient un latex modifié L' dont la viscosité augmente progressivement avec le temps depuis l'addition du composé C jusqu'à la formation d'un gel ; puis
(E2) on introduit dans le milieu M le latex modifié ainsi obtenu avant la formation du gel et on laisse le gel se former au sein du milieu M.

2. Procédé selon la revendication 1, où le polymère P est préparé à partir de monomères comprenant des acrylates répondant à la formule CH2=COOR, où R est, de façon indépendante, une chaîne hydrocarbonée, linéaire ou ramifiée, saturée ou insaturée, cyclisée en tout ou partie ou non cyclique, éventuellement interrompue par un ou plusieurs hétéroatomes (notamment S, O, N ou Si), le groupe R pouvant être éventuellement halogéné voire perhalogéné, R étant de préférence un groupe alkyle comportant de 1 à 6 atomes de carbone.

3. Procédé selon l'une des revendications 1 à 2, où le polymère P comprend des fonctions latérales esters d'éthyle -COO-C₂H₅, ester de propyle -COO-C₃H₇ ou ester de butyle -COOC₄H₉.

4. Procédé selon l'une des revendications 1 à 3, où le polymère P est porteur de fonctions latérales esters d'éthyle -COO-C₂H₅, résultant d'une polymérisation d'acrylate d'éthyle, de préférence d'une copolymérisation d'acrylates d'éthyle avec d'autres monomères.

5. Procédé selon l'une des revendications 1 à 3, où, en plus de groupes esters, le polymère P est porteur de groupes hydrophiles stabilisants qui permettent une stabilisation du latex L.

6. Procédé selon la revendication 5, où les groupes stabilisants sont des groupes sulfobétaines

7. Procédé selon l'une des revendications précédentes, où le polymère P est porteur de groupements hydrophobes propres à accentuer les phénomènes de gélification dans les étapes (E1) et (E2)

8. Utilisation d'un procédé selon l'une des revendications 1 à 7, où le milieu M est une formation souterraine, et où le gel réalisé est employé pour former de façon réversible un bouchon au sein de ladite formation souterraine, notamment au sein d'un puits de pétrole.

## Patentansprüche

1. Verfahren zur Bildung eines Gels in einem Medium M, insbesondere in einer unterirdischen Formation, das die folgenden Schritte umfasst:
(E1) man fügt zu einem flüssigen Latex L, umfassend dispergierte Teilchen eines Polymers P, das seitenständige Esterfunktionen trägt, eine basische Verbindung C in einer Menge hinzu, die geeignet ist, mindestens einen Teil der seitenständigen Esterfunktionen zu Carbonsäure- und/oder Alkoholfunktionen zu hydrolysieren, wodurch man einen modifizierten Latex L' erhält, dessen Viskosität mit der Zeit ab dem Hinzufügen der Verbindung C bis zur Bildung eines Gels allmählich zunimmt; dann
(E2) man trägt den so erhaltenen modifizierten Latex vor der Bildung des Gels in das Medium M ein und lässt das Gel sich in dem Medium M bilden.

2. Verfahren nach Anspruch 1, wobei das Polymer P aus Monomeren hergestellt wird, die Acrylate der Formel CH2=COOR entsprechen, wobei R unabhängig eine lineare oder verzweigte, gesättigte oder ungesättigte Kohlenwasserstoffkette ist, die ganz oder teilweise cyclisiert oder nicht cyclisch ist und gegebenenfalls durch ein oder mehrere Heteroatome (insbesondere S, O, N oder Si) unterbrochen ist, wobei die Gruppe R gegebenenfalls halogeniert oder sogar perhalogeniert sein kann, wobei R vorzugsweise eine Alkylgruppe mit 1 bis 6 Kohlenstoffatomen ist.

3. Verfahren nach einem der Ansprüche 1 bis 2, wobei das Polymer P seitenständige Ethylesterfunktionen -COO-C₂H₅, Propylesterfunktionen -COO-C₃H₇ oder Butylesterfunktionen -COO-C₄H₉ umfasst.

4. Verfahren nach einem der Ansprüche 1 bis 3, wobei das Polymer P seitenständige Ethylesterfunktionen -COO-C₂H₅ trägt, die sich aus einer Polymerisation von Ethylacrylat, vorzugsweise einer Copolymerisation von Ethylacrylaten mit anderen Monomeren, ergeben.

5. Verfahren nach einem der Ansprüche 1 bis 3, wobei das Polymer P zusätzlich zu Estergruppen stabilisierende hydrophile Gruppen trägt, die eine Stabilisierung des Latex L ermöglichen.

6. Verfahren nach Anspruch 5, wobei es sich bei den stabilisierenden Gruppen um Sulfobetaingruppen handelt.

7. Verfahren nach einem der vorhergehenden Ansprüche, wobei das Polymer P hydrophobe Gruppen trägt, die geeignet sind, die Gelbildungsphänomene in den Schritten (E1) und (E2) zu verstärken.

8. Verwendung eines Verfahrens nach einem der Ansprüche 1 bis 7, wobei es sich bei dem Medium M um eine unterirdische Formation handelt und wobei das erzeugte Gel verwendet wird, um in der unterirdischen Formation, insbesondere in einem Bohrloch, auf reversible Weise einen Verschluss zu bilden.

## Claims

1. Process forming a gel within a medium M, in particular within an underground formation, which comprises the following steps:
(E1) a basic compound C is added to a fluid latex L comprising dispersed particles of a polymer P, bearing ester side functions, said basic compound C being added in an amount suitable for hydrolysing at least one part of said ester side functions into carboxylic acid and/or alcohol functions, as a result of which a modified latex L' is obtained, the viscosity which gradually increases with time from the addition of the compound C up to the formation of a gel; then
(E2) the resulting modified latex is introduced into the medium M before the formation of the gel and the gel is left to form within the medium M.

2. Process according to Claim 1, wherein the polymer P is prepared from monomers comprising acrylates corresponding to the formula CH₂=COOR, where R is, independently, a totally or partially cyclized or noncyclic, saturated or unsaturated, linear or branched hydrocarbon-based chain optionally interrupted with one or more heteroatoms (in particular S, O, N or Si), it being possible for the R group to be optionally halogenated, or even perhalogenated, R preferably being an alkyl group comprising from 1 to 6 carbon atoms.

3. Process according to either of Claims 1 and 2, wherein the polymer P comprises ethyl ester -COO-C₂H₅, propyl ester -COO-C₃H₇ or butyl ester -COOC₄H₉ side functions.

4. Process according to one of Claims 1 to 3, wherein the polymer P bears ethyl ester -COO-C₂H₅ side functions, resulting from a polymerization of ethyl acrylate, preferably from a copolymerization of ethyl acrylates with other monomers.

5. Process according to one of Claims 1 to 3, wherein, in addition to ester groups, the polymer P bears stabilizing hydrophilic groups which allow stabilization of the latex L.

6. Process according to Claim 5, wherein the stabilizing groups are sulfobetaine groups.

7. Process according to one of the preceding claims, wherein the polymer P bears hydrophobic groups suitable for accentuating the gelling phenomena in steps (E1) and (E2).

8. Use of a process according to one of Claims 1 to 7, wherein the medium M is an underground formation and wherein the gel produced is used to reversibly form a plug within said underground formation, in particular within an oil well.
